(19) Europäisches Patentamt
European Patent Office
Office européen des brevets

(11) EP 2 525 124 A1

(12) **EUROPEAN PATENT APPLICATION**
published in accordance with Art. 153(4) EPC

(43) Date of publication:
**21.11.2012 Bulletin 2012/47**

(21) Application number: **11828645.9**

(22) Date of filing: **18.08.2011**

(51) Int Cl.:
***F16L 11/08** (2006.01)* ***B32B 1/08** (2006.01)*
***B32B 25/18** (2006.01)*

(86) International application number:
**PCT/JP2011/068652**

(87) International publication number:
**WO 2012/043084 (05.04.2012 Gazette 2012/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2011 JP 2011056921**
**29.09.2010 JP 2010218673**

(71) Applicant: **Tokai Rubber Industries, Ltd.**
**Komaki-shi, Aichi 485-8550 (JP)**

(72) Inventors:
- **OYAIZU, Naoki**
**Komaki-shi**
**Aichi 485-8550 (JP)**
- **KATAYAMA, Kazutaka**
**Komaki-shi**
**Aichi 485-8550 (JP)**
- **TAGUCHI, Takehiko**
**Komaki-shi**
**Aichi 485-8550 (JP)**

(74) Representative: **Müller-Boré & Partner Patentanwälte**
**Grafinger Straße 2**
**81671 München (DE)**

# (54) REFRIGERANT TRANSPORTING HOSE AND MANUFACTURING METHOD THEREFOR

(57) To provide a hose for transporting a refrigerant, a butyl rubber layer 7 is formed on outer periphery of a tubular resin layer 1, which is in contact with a refrigerant, and an ethylene-propylene rubber layer 8 is further formed on the outer periphery thereof. The resin layer 1 is composed of a material that contains, as a main component, a mixture of a polyamide resin and a modified polyolefin elastomer, a skin layer 6 is formed only on an inner peripheral surface of the resin layer, and tensile modulus (A) of the skin layer 6, tensile modulus (B) of the resin layer 1 excluding the skin layer 6, tensile modulus (C) of the butyl rubber layer 7, and tensile modulus (D) of the ethylene-propylene rubber layer 8 satisfy the relationship that is defined by the following formula ($\alpha$):

$$(A) > (B) > (C) > (D) \cdots (\alpha).$$

Fig. 4

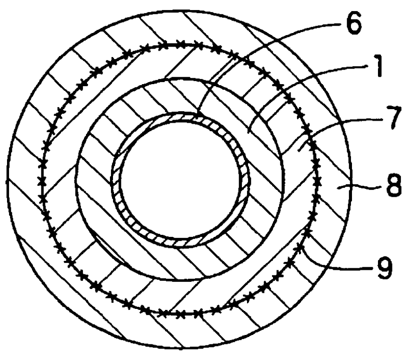


EP 2 525 124 A1

## Description

### TECHNICAL FIELD

The present invention relates to a hose for transporting a refrigerant and a method of producing the same. More specifically, it relates to a hose for transporting a refrigerant that is used for a vehicle such as an automobile and a method of producing the same.

### BACKGROUND ART

In recent days, according to the tighter control on production of ozone layer-depleting gas, more strict rules are imposed on a barrier property (i.e. refrigerant-permeability resistance) of a refrigerant transporting hose (i.e. a hose for an air-conditioner) used for an automobile or the like. For such reasons, a resin with high crystallinity such as polyamide resin is used as a material for a refrigerant transporting hose.

The polyamide resin has an excellent barrier property (i.e. refrigerant-permeability resistance). However, as having poor flexibility, there is a problem that it may be easily broken when a hose is bent. Thus, the polyamide resin alone is hardly used as a material for a refrigerant transporting hose. Instead, a polyamide resin mixed with a softer material than the resin, e.g. modified polyolefin, is used (see Patent Literature 1).

### CITATION LIST

### PATENT LITERATURE

Patent Literature 1: Japanese Patent No. 4365454

### SUMMARY OF INVENTION

Compared to a case in which only the polyamide resin is used, the refrigerant transporting hose disclosed in Patent Literature 1 can have flexibility by mixing a modified polyolefin. However, there is still a problem that the breaking of the hose when it is bent (shaken) cannot be fully avoided.

The present invention is devised in view of the problems described above, and object of the invention is to provide a hose for transporting a refrigerant which can have both a barrier property (i.e. refrigerant-permeability resistance) and a flexibility and can solve the problem of hose breaking when the hose is bent, and a method of producing the hose for transporting a refrigerant.

To achieve the purpose of the invention described above, the first aspect of the invention is to provide a hose for transporting a refrigerant including a butyl rubber layer formed on an outer periphery of a tubular resin layer in contact with a refrigerant and an ethylene-propylene rubber layer formed on an outer periphery of the butyl layer, wherein the resin layer is composed of a material for resin layer which contains, as a main component, a mixture of a polyamide resin and a modified polyolefin elastomer and a skin layer is formed only on an inner peripheral surface of the resin layer so that tensile modulus (A) of the skin layer, tensile modulus (B) of the resin layer excluding the skin layer, tensile modulus (C) of the butyl rubber layer, and tensile modulus (D) of the ethylene-propylene rubber layer satisfy the relationship that is defined by the following formula ($\alpha$):

$$(A) > (B) > (C) > (D) \cdots (\alpha)$$

The second aspect of the invention relates to a method of producing the hose for transporting a refrigerant, i.e. a method of producing a hose for transporting a refrigerant including polishing an outer skin layer between an inner skin layer and an outer skin layer that are formed on an inner peripheral surface and an outer peripheral surface, respectively, of a tubular resin layer obtained by an extrusion of a material for resin layer containing, as a main component, a mixture of a polyamide resin and a modified polyolefin elastomer so as to remove the outer skin layer, forming a butyl rubber layer on the outer periphery of the resin layer, and further forming an ethylene-propylene rubber layer on the outer periphery of the butyl rubber layer.

Specifically, inventors carried out intensive studies to obtain a refrigerant transporting hose having both a barrier property (i.e. refrigerant-permeability resistance) and flexibility which enables solving the problem of breaking hose at the time of bending. It was found during the course of the studies that, when a material for a resin layer containing, as a main component, a mixture of a polyamide resin and a modified polyolefin elastomer, is extruded to have a hose

shape, an inner skin layer 2 and an outer skin layer 3, both have thickness of about 3 to 5 μm and are made of a polyamide resin 4, are formed on an inner peripheral surface and an outer peripheral surface, respectively, of a tubular resin layer 1 (see FIG. 1) composed of the material for resin layer, as illustrated in FIG. 2 (enlarged view of part A in FIG. 1). This is believed to be due to the fact that melt viscosity of the polyamide resin 4 is lower than the melt viscosity of a modified polyolefin elastomer 5 and the polyamide resin 4 having low melt viscosity is more easily melt than the modified polyolefin elastomer 5, and as a result, the skin layer 2 and the skin layer 3 composed of the polyamide resin 4 are formed. However, as described above, because the polyamide resin is a resin having high crystallinity, it has poor flexibility. Thus, the skin layer 2 and the skin layer 3 composed of the polyamide resin 4 also have poor flexibility. The inner skin layer 2 formed on an inner peripheral surface of the tubular resin layer 1 can easily adapt to any curve of a hose so that breaking of a resin on inner surface of the hose does not occur. However, the outer skin layer 3 on an outer peripheral surface of the tubular resin layer 1 cannot easily adapt to a curve (shaking) of a hose so that local stress concentration occurs thereon when a hose is bent. Accordingly, it was found that the breaking of the resin layer 1 starts to occur at the outer skin layer 3. In this connection, inventors of the invention carried out further studies to solve the problems, and as a result came up with an idea of polishing the outer skin layer 3 to completely remove the outer skin layer 3 on an outer peripheral surface of the resin layer 1 (see FIG. 3), forming a butyl rubber layer having lower tensile modulus than the resin layer 1 on an outer peripheral surface (removal surface) 1a, and forming an ethylene-propylene rubber layer having lower tensile modulus than the butyl rubber layer on the outer periphery of the butyl rubber layer. Because the skin layer 2 formed on an inner peripheral surface of the resin layer 1 is composed of the polyamide resin 4 and the resin layer 1 on the outer peripheral surface of the skin layer 2 is composed of a material in which the polyamide resin 4 is mixed with the modified polyolefin elastomer 5, the tensile modulus of the skin layer 2 is higher than the tensile modulus of the resin layer 1. In other words, it was found that the breaking hose problem can be solved by having a constitution in which inner skin layer 2 that is the innermost layer, outer resin layer 1, a butyl rubber layer, and an ethylene-propylene rubber layer are provided in the order so that tensile modulus (hardness) of each layer sequentially decreases, and as a result, the invention was completed.

As described above, an outer skin layer which cannot adapt to hose deformation when the hose is bent is removed from a resin layer surface of the refrigerant transporting hose of the invention. Further, it has a constitution in which an inner skin layer that is the innermost layer, an outer resin layer, a butyl rubber layer, and an ethylene-propylene rubber layer are provided in the order so that tensile modulus (hardness) of each layer sequentially decreases. As such, according to the invention, stress concentration can be relieved when a hose is bent and adaptation to hose deformation can be obtained, and therefore the breaking hose problem can be avoided. Further, because the tubular resin layer is composed of a material for a resin layer which contains, as a main component, a mixture of polyamide resin having an excellent barrier property (i.e. refrigerant-permeability resistance) and a modified polyolefin elastomer having flexibility, it can have both the barrier property (i.e. refrigerant-permeability resistance) and flexibility.

Further, when modification in the modified polyolefin elastomer is at least any one of maleic anhydride modification and epoxy modification, flexibility of the hose can be improved.

Further, by having the mixing ratio between the polyamide resin (a) and the modified polyolefin elastomer (b) within the range of (a)/(b) = 90/10 to 60/40 in terms of weight, a favorable balance between the barrier property (i.e. refrigerant-permeability resistance) and the flexibility can be obtained as caused by the polyamide resin having excellent barrier property (i.e. refrigerant-permeability resistance) and the modified polyolefin elastomer having flexibility.

Still further, when the refrigerant transporting hose of the present invention is produced by polishing an outer skin layer to remove the outer skin layer, forming a butyl rubber layer on the outer periphery thereof, and forming an ethylene-propylene rubber layer on the outer periphery of the butyl rubber layer, unevenness on the outer peripheral surface (removal surface) 1a of the resin layer 1 is yielded by the polishing as illustrated in FIG. 3. Thus, according to a so-called anchor effect, adhesion between the resin layer 1 and the butyl rubber layer is improved.

## BRIEF DESCRIPTION OF DRAWINGS

FIG. 1 is a schematic diagram illustrating a tubular resin layer obtained by extrusion process.

FIG. 2 is a schematic diagram illustrating an enlarged view of the part A in the tubular resin layer of FIG. 1.

FIG. 3 is a schematic diagram illustrating part of the refrigerant transporting hose of an embodiment of the invention after polishing.

FIG. 4 is a drawing illustrating the cross-section constitution of the refrigerant transporting hose of an embodiment of the invention.

FIG. 5 is a drawing to explain a whip test.

DETAILED DESCRIPTION OF EMBODIMENTS

Herein below, embodiments of the invention are explained in detail. However, it is evident that the invention is not limited by them.
The refrigerant transporting hose of the invention is composed of, as illustrated in FIG. 4, for example, a skin layer 6 (which corresponds to the inner skin layer 2 of FIG. 2) formed only on an inner peripheral surface of a tubular resin layer 1, a butyl rubber layer 7 formed on an outer peripheral surface of the resin layer 1, and an ethylene-propylene rubber layer 8 formed on an outer peripheral surface of the butyl rubber layer through a reinforcing layer 9. Further, in the refrigerant transporting hose of the invention, an outer skin layer 3 on an outer peripheral surface of the tubular resin layer 1 is removed by polishing (see FIG. 2).
According to an embodiment of the invention, a skin layer 6 that is the innermost layer, an outer resin layer 1, a butyl rubber layer 7, and an ethylene-propylene rubber 8 are provided in this order so that tensile modulus (hardness) of each layer sequentially decreases. Specifically, tensile modulus (A) of the skin layer 6, tensile modulus (B) of the resin layer 1 excluding the skin layer 6, tensile modulus (C) of the butyl rubber layer 7, and tensile modulus (D) of the ethylene-propylene rubber layer 8 satisfy the relationship that is defined by the following formula ($\alpha$), and it is the most unique feature of the invention:

$$(A) > (B) > (C) > (D) \cdots (\alpha)$$

The tensile modulus (A) of the skin layer 6 is preferably in the range of 3000 to 2000 MPa. Particularly preferably, it is in the range of 2600 to 2400 MPa. The tensile modulus (B) of the resin layer 1 is preferably in the range of less than 2000 MPa and 500 MPa or higher. Particularly preferably, it is in the range of 1000 to 600 MPa. The tensile modulus (C) of the butyl rubber layer 7 is preferably in the range of less than 500 MPa and 10 MPa or higher. Particularly preferably, it is in the range of 20 to 10 MPa. The tensile modulus (D) of the ethylene-propylene rubber layer 8 is preferably less than 10 MPa. Particularly preferably, it is less than 7 MPa.
Tensile modulus (hardness) of each layer indicates the value measured according to JIS K 7127 under the elongation rate condition of 5 $\pm$ 1.0 mm per minute. Tensile modulus (hardness) of each layer can be measured by using, for example, a universal hardness tester, a micro hardness tester, or the like.
Herein below, materials for forming each layer of the refrigerant transporting hose of the invention are explained.

<<Resin Layer>>

The resin layer 1 of the refrigerant transporting hose of the invention is formed by using a material for a resin layer which contains, as a main component, a mixture of a polyamide resin and a modified polyolefin elastomer.

<Polyamide resin>

Examples of the polyamide resin include polyamide 6 (PA6), polyamide 11 (PA11), polyamide 12 (PA12), polyamide 46 (PA46), polyamide 66 (PA66), polyamide 92 (PA92), polyamide 99 (PA99), polyamide 610 (PA610), polyamide 612 (PA612), polyamide 912 (PA912), polyamide 1010 (PA1010), a copolymer of polyamide 6 and polyamide 12 (PA6/12), a copolymer of polyamide 6 and polyamide 66 (PA6/66), aromatic nylon, and the like. It may be used either singly or in combination of two or more. Of these, as having an excellent barrier property (i.e. refrigerant-permeability resistance) and excellent interlayer adhesion, polyamide 6 is preferable.

<Modified polyolefin elastomer>

Modified polyolefin elastomer is obtained by chemical modification of a polymer side chain or terminal of a polyolefin elastomer with maleic anhydride, silicone (silane), chlorine, amine, acryl, an epoxy compound, or the like, wherein the polyolefin elastomer is prepared by homopolymerization or copolymerization of an olefin such as ethylene, propylene, and butadiene, or a diene monomer. The modified polyolefin elastomer is used either singly or in combination of two or more. Of these, from the viewpoint of excellent adhesion and processability, an ethylene-propylene-diene ternary copolymer rubber (EPDM) modified with maleic anhydride or a copolymer of glycidyl methacrylate and ethylene (epoxy modified polyolefin elastomer) are preferable.
The mixing ratio between the polyamide resin (a) and the modified polyolefin elastomer (b) is preferably (a)/(b) = 90/10 to 60/40, in terms of weight ratio. Particularly preferably, it is in the range of (a)/(b) = 85/15 to 70/30. In other words, when the mixing ratio of the polyamide resin (a) is too high, flexibility tends to get deteriorated. On the other hand,

when the mixing ratio of the polyamide resin (a) is too low, the barrier property (i.e. refrigerant-permeability resistance) tends to get deteriorated.

Examples of the mixture of the polyamide resin and the modified polyolefin elastomer include an alloy of the polyamide resin and the modified polyolefin elastomer, and the like.

Further, the material for forming the resin layer 1 (i.e. resin material) may be suitably added with, in addition to the mixture of the polyamide resin and the modified polyolefin elastomer, additives such as a filler, a plasticizer, and an anti-aging agent, if necessary. The additives may be used either singly or in combination of two or more.

<<Skin Layer>>

As illustrated in FIG. 4, the skin layer 6 with thickness of about 3 to 5 μm is present on an inner peripheral surface of the tubular resin layer 1. The skin layer 6 is an innermost layer which is in direct contact with a refrigerant, i.e. flowing medium. The skin layer 6 is made of the polyamide resin which melt viscosity is lower than that of the modified polyolefin elastomer, thus the polyamide resin is melt at the time of forming the resin layer 1 during a process of extruding materials for resin layer containing, as a main component, a mixture of the polyamide resin and the modified polyolefin elastomer.

Further, as explained above, although the outer skin layer 3 is also formed on an outer peripheral surface of the tubular resin layer 1 by an extrusion process of the materials for resin layer (see FIG. 2), according to this invention, the outer skin layer 3 is removed by a polishing treatment or the like as explained below. Thus, in the refrigerant transporting hose as a final product, only the inner skin layer 2 (corresponding to the skin layer 6 of FIG. 4) is present on the inner peripheral surface of the tubular resin layer 1, while the outer skin layer 3 is absent on the outer peripheral surface of the resin layer.

<<Butyl Rubber Layer>>

As illustrated in FIG. 4, from the viewpoint of blocking a refrigerant or moisture, a butyl rubber layer 7 having butyl rubber as a rubber base is formed on an outer peripheral surface of the tubular resin layer 1 (i.e. a surface from which the outer skin layer is removed). If necessary, the butyl rubber composition which constitutes the butyl rubber layer 7 may be suitably added with, a resin cross-linking agent, a process aid, carbon black, a filler, a softening agent, zinc oxide, and an adhesive component (e.g. a resorcin compound, a melamine compound, and the like), and the like, in addition to the butyl rubber. It may be used either singly or in combination of two or more.

<Butyl rubber>

Examples of the butyl rubber that can be used include butyl rubber (IIR), halogenated butyl rubber, or the like. It may be used either singly or in combination of two or more. Examples of the halogenated butyl rubber include chlorinated butyl rubber (Cl-IIR), brominated butyl rubber (Br-IIR), and the like.

<Resin cross-linking agent>

Examples of the resin cross-linking agent include formaldehyde condensate of alkyl phenol, and the like. More specific examples of the resin cross-linking agent include alkyl phenol · formaldehyde condensate (trade name: TACKIROL 201MB35, manufactured by Taoka Chemical Co., Ltd.), and the like.

Content of the resin cross-linking agent is preferably 20 to 40 parts by weight relative to 100 parts by weight of the butyl rubber.

<Process aid>

Examples of the process aid include stearic acid, and the like.

Content of the process aid is preferably 0.5 to 2 parts by weight relative to 100 parts by weight of the butyl rubber.

<Carbon black>

Examples of the carbon black include SAF, ISAF, HAF, MAF, FEF, GPF, SRF, FT, MT grade carbon black, and the like. It may be used either singly or in combination or two or more. Of these, ISAF grade carbon black is preferable.

Content of the carbon black is preferably 10 to 40 parts by weight relative to 100 parts by weight of the butyl rubber.

<Filler>

Examples of the filler include an inorganic compound originating from minerals such as talc and mica. It may be used either singly or in combination of two or more.

Content of the filler is preferably 1 to 20 parts by weight relative to 100 parts by weight of the butyl rubber.

<Softening agent>

Examples of the softening agent include a petroleum-based softening agent such as process oil, lubricant, paraffin, fluid paraffin, petroleum asphalt, and vaseline, an oil-based softening agent such as castor oil, rape seed oil, canola oil, and palm oil, waxes such as tall oil, sap, bee wax, carnauba wax, and lanolin, linolenic acid, palmitic acid, stearic acid, lauric acid, and the like. It may be used either singly or in combination of two or more.

Content of the softening agent is preferably 0.5 to 10 parts by weight relative to 100 parts by weight of the butyl rubber.

<Zinc oxide>

Content of the zinc oxide is preferably 1 to 10 parts by weight relative to 100 parts by weight of the butyl rubber.

<Adhesive component>

Examples of the adhesive component include a resorcinol compound, a melamine compound, and the like. It may be used either singly or in combination of two or more.

<Resorcinol compound (adhesive component)>

It is preferable that the resorcinol compound is mainly used as adhesives. Examples thereof include modified resorcin · formaldehyde resin, resorcin, resorcin · formaldehyde (RF) resin, and the like. It may be used either singly or in combination of two or more. Of these, from the viewpoint of transpiration and compatibility with rubber, modified resorcin · formaldehyde resin is preferably used.

Examples of the modified resorcin · formaldehyde resin include those represented by the following formula (1) to formula (3). It may be used either singly or in combination of two or more. Of these, those represented by the formula (1) are particularly preferable.

[Chemical formula 1]

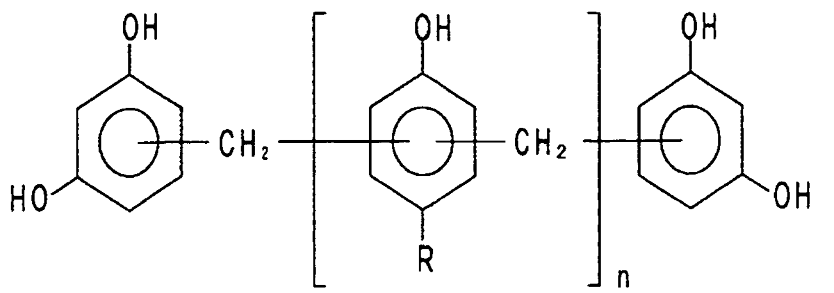

···(1)

[In the formula, R represents a hydrocarbon group and n represents an integer]

[Chemical formula 2]

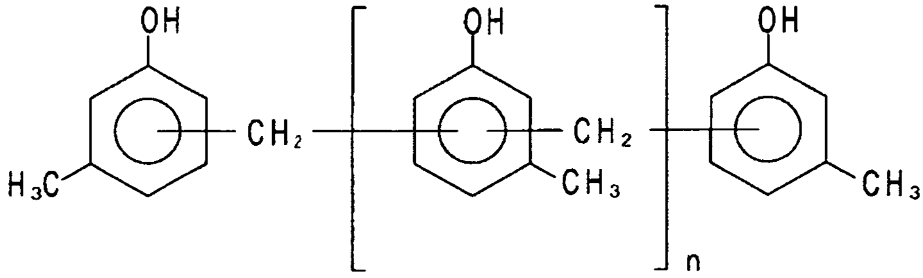

...(2)

[In the formula, n represents an integer]

[Chemical formula 3]

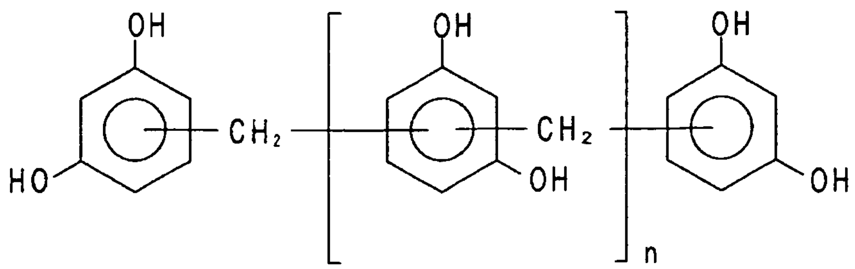

...(3)

[In the formula, n represents an integer]

<Melamine compound (adhesive component)>

Examples of the melamine compound include methylated product of formaldehyde · melamine polymer, hexamethylene tetramine , and the like. It may be used either singly or in combination of two or more. It is decomposed by heat during cross-linking to provide the system with formaldehyde. Among them, from the viewpoint of low volatility and good compatibility with rubber, methylated product of formaldehyde · melamine polymer is preferable.

Preferred examples of the methylated product of formaldehyde · melamine polymer include those represented by the following formula (4). In particular, among those represented by the formula (4), a mixture containing 43 to 44% by weight of the compound wherein n = 1, 27 to 30% by weight of the compound wherein n = 2, and 26 to 30% by weight of the compound wherein n = 3 is preferable.

[Chemical formula 4]

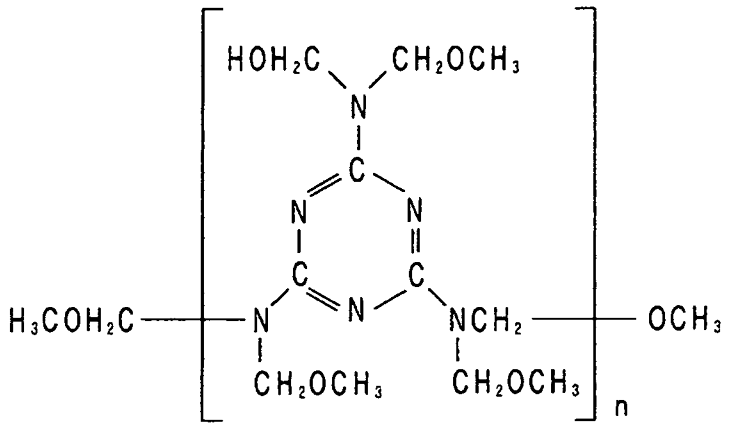

...(4)

[In the formula, n represents an integer]

Content of the adhesive component (resorcin compound and melamine compound and the like) is preferably 5 parts by weight or less relative to 100 parts by weight of the butyl rubber.

The butyl rubber composition can be prepared by mixing each components and kneading them by using a blending machine such as a kneader, a banbury mixer, or a roll.

<<Ethylene-propylene rubber layer>>

As illustrated in FIG. 4, ethylene-propylene rubber layer 8 having ethylene-propylene rubber as a rubber base is formed on an outer peripheral surface of the butyl rubber layer 7 through the reinforcing layer 9. The ethylene-propylene rubber composition which constitutes ethylene-propylene rubber layer 8 may be suitably added with, if necessary, a process aid, zinc oxide, a tackifier, carbon black, a vulcanizing aid, a softening agent, a vulcanizing promoter, and a vulcanizing agent, in addition to the ethylene-propylene rubber. It may be used either singly or in combination of two or more.

<Ethylene-propylene rubber>

Examples of the ethylene-propylene rubber include an ethylene-propylene-diene ternary copolymer rubber (EPDM), ethylene-propylene copolymer rubber (EPM), and the like. It may be used either singly or in combination of two or more.

As for the ethylene-propylene rubber, those having iodine value within the range of 16 to 28 and ethylene ratio within the range of 48 to 70% by weight are preferable, from the viewpoint of excellent stability under high temperature and high pressure condition. Those having iodine value within the range of 6 to 26 and ethylene ratio within the range of 48 to 75% by weight are particularly preferable.

As a diene monomer included in the EPDM (i.e. a third component), a diene monomer having 5 to 20 carbon atoms is preferable. Specific examples of the preferred monomer include 1,4-pentadiene, 1,4-hexadine, 1,5-hexadiene, 2,5-dimethyl-1,5-hexadiene, 1,4-octadiene, 1,4-cyclohexadiene, cyclooctadiene, dicyclopentadiene (DCP), 5-ethylidene-2-norbornene (ENS), 5-butylidene-2-norbornene, 2-methyl-5-norbornene, 2-isopropenyl-5-norbornene, and the like. Among these diene monomers (i.e. a third component), dicyclopentadiene (DCP) and 5-ethylidene-2-norbornene (ENS) are preferable.

<Process aid>

Examples of the process aid include stearic acid, and the like.

Content of the process aid is preferably 0.5 to 2 parts by weight relative to 100 parts by weight of the ethylene-propylene rubber.

<Zinc oxide>

Content of the zinc oxide is preferably 1 to 10 parts by weight relative to 100 parts by weight of the ethylene-propylene rubber.

<Tackifier>

Content of the tackifier is preferably 0.5 to 4 parts by weight relative to 100 parts by weight of the ethylene-propylene rubber.

<Carbon black>

As for the carbon black, those having excellent extrusion processability or reinforcing property are preferable. Examples of the carbon black include various kinds of SAF, ISAF, HAF, MAF, FEF, GPF, SRF, FT, MT grade carbon black, and the like. It may be used either singly or in combination or two or more. Of these, FEF grade carbon black is preferable.

Content of the carbon black is preferably 50 to 150 parts by weight relative to 100 parts by weight of the ethylene-propylene rubber.

<Vulcanizing aid>

Examples of the vulcanizing aid include zinc oxide (ZnO), magnesium oxide, and the like. It may be used either singly or in combination or two or more.

Content of the vulcanizing aid is preferably 0. 5 to 2 parts by weight relative to 100 parts by weight of the ethylene-propylene rubber.

<Softening agent>

Examples of the softening agent include a petroleum-based softening agent such as process oil, lubricant, paraffin, fluid paraffin, petroleum asphalt, and vaseline, an oil-based softening agent such as castor oil, rape seed oil, canola oil, and palm oil, waxes such as tall oil, sap, bee wax, carnauba wax, and lanolin, linolenic acid, palmitic acid, stearic acid, lauric acid, and the like. It may be used either singly or in combination of two or more.

Content of the softening agent is preferably 50 to 90 parts by weight relative to 100 parts by weight of the ethylene-propylene rubber.

<Vulcanizing promoter>

Examples of the vulcanizing promoter include a vulcanizing promoter such as thioram, dithiocarbamic acid salt, and sulfen amide. It may be used either singly or in combination of two or more.

Content of the vulcanizing promoter is preferably 0.2 to 2 parts by weight relative to 100 parts by weight of the ethylene-propylene rubber.

Examples of the thioram vulcanizing promoter include tetramethyl thioram disulfide (TT), tetraethyl thioram disulfide (TET), tetrabutyl thioram disulfide (TBTD), tetrakis(2-ethylhexyl) thioram disulfide (TOT), tetrabenzyl thioram disulfide (TBZTD), and the like. It may be used either singly or in combination of two or more.

Examples of the sulfen amide vulcanizing promoter include N-oxydiethylene-2-benzothiazolyl sulfen amide (NOBS), N-cyclohexyl-2-benzothiazolyl sulfen amide (CM), N-t-butyl-2-benzothiazolyl sulfen amide (BBS), N,N'-dicyclohexyl-2-benzothiazolyl sulfen amide, and the like. It may be used either singly or in combination of two or more.

<Vulcanizing agent>

Examples of the vulcanizing agent include sulfur, peroxide vulcanizing agent (peroxide sulfurizing agent), and the like, and it may be used either singly or in combination of two or more. Of these, from the view point of storage stability and cost, sulfur is preferable.

Content of the vulcanizing agent is preferably 0.5 to 2 parts by weight relative to 100 parts by weight of the ethylene-propylene rubber.

The ethylene-propylene rubber composition can be prepared by mixing each components and kneading them by using a blending machine such as a kneader, a banbury mixer, or a roll.

<<Reinforcing layer>>

At an interface between the butyl rubber layer 7 and the ethylene-propylene rubber layer 8, a reinforcing layer

9 is provided. Examples of the material for forming the reinforcing layer 9 include reinforcing wire materials such as polyethylene terephthalate (PET), polyethylene naphthalate (PEN), aramide, polyamide, vinylon, rayon, and metal wire. The reinforcing layer 9 can be produced by braiding the reinforcing wire materials by spiral braiding, blade braiding, knit braiding, or the like.

Next, a method of producing a refrigerant transporting hose is explained. First, by extruding a material for resin layer containing a mixture of a polyamide resin and a modified polyolefin elastomer as a main component on a mandrel (not illustrated) to form in a hose shape, a tubular resin layer 1 is formed (see FIG. 1). Then, between the inner skin layer 2 and the outer skin layer 3 that are formed on an inner peripheral surface and an outer peripheral surface, respectively, of the tubular resin layer 1 (see FIG. 2), only the outer skin layer 3 is subjected to a polishing treatment by using a wire brush or the like to completely remove the outer skin layer 3 from the surface of the resin layer 1 (see FIG. 3).

Next, on an outer peripheral surface (removal layer) 1a of the resin layer 1 from which the outer skin layer 3 is removed, butyl rubber material (i.e. butyl rubber composition) is extruded to form a butyl rubber layer 7 as illustrated in FIG. 4. After that, by blade braiding or the like of a reinforcing wire material on the outer peripheral surface thereof, a reinforcing layer 9 is formed. Further, by extruding the material for an ethylene-propylene rubber (i.e. ethylene-propylene rubber composition) on the outer peripheral surface of the reinforcing layer 9, an ethylene-propylene rubber layer 8 is formed. After vulcanization under a pre-determined condition (e.g. 170°C $\times$ 30 min), the mandrel is removed. As a result, a refrigerant transporting hose wherein the skin layer 6 is formed on the inner peripheral surface of the tubular resin layer 1, the butyl rubber layer 7 is formed on the outer peripheral surface of the resin layer 1, and the ethylene-propylene rubber layer 8 is formed on the outer peripheral surface of the butyl rubber layer through the reinforcing layer 9 can be obtained (see FIG. 4). Further, for improving interlayer adhesion of the refrigerant transporting hose, adhesives can be applied on each interlayer.

The polishing treatment can be carried out by using a polishing brush such as wire brush or a polishing file. According to the invention, the polishing treatment can be carried out by, for example, rotating a spiral polishing brush or a polishing file at pre-determined rotation number and rotation rate and supplying continuously the tubular resin layer 1 (see FIG. 1) thereto to remove the outer skin layer 3 of the tubular resin layer 1 (see FIG. 2).

Examples of the material of a polishing brush such as wire brush or a polishing file include stainless steel, carbon, and the like.

With respect to the refrigerant transporting hose of the invention, inner diameter of the hose is preferably in the range of 5 to 40 mm. Further, thickness of the resin layer 1 is preferably in the range of 0.01 to 0.5 mm, and particularly preferably in the range of 0.10 to 0.20 mm. Thickness of the skin layer 6 is preferably in the range of 1 to 7 $\mu$m, and particularly preferably in the range of 3 to 5 $\mu$m. Thickness of the butyl rubber layer 7 is generally in the range of 1 to 2 mm, and the thickness of the ethylene-propylene rubber layer 8 is generally in the range of 0.5 to 2 mm.

## EXAMPLES

Herein below, the Examples are explained along with the Comparative examples. However, it is evident that the invention is not limited by these Examples.

### [Example 1]

#### <Preparation of resin layer material>

By using a double-axis kneader (manufactured by JSW STEEL LTD.), polyamide 6 (PA6) (trade name: NYLON 6 1030B, manufactured by Ube Industries, Ltd.) as a polyamide resin and maleic anhydride modified EPDM (trade name: TAFMER MH7020, manufactured by Mitsui Chemicals, Inc.) as a modified polyolefin elastomer were mixed at the temperature the same or higher than the melting point of the polyamide resin (250°C). The mixing ratio (weight ratio) between the polyamide resin (a) and the modified polyolefin elastomer (b) was (a)/(b) = 70/30.

#### <Preparation of butyl rubber layer material (butyl rubber composition)>

100 parts by weight of chlorinated butyl rubber (CI-IIR) (trade name: BUTYL HT1066, manufactured by JSR CORPORATION), 1 part by weight of stearic acid (trade name: LUNAC S30, manufactured by Kao Corporation), 20 parts by weight of FEF grade carbon black (trade name: SEAST SO, manufactured by TOKAI CARBON CO., LTD.), 100 parts by weight of talc (trade name: MICRO ACE K-1, manufactured by NIPPON TALC Co., Ltd.), 10 parts by weight of naphthene oil (trade name: DIANA PROCESS NM-300, manufactured by Idemitsu Kosan Co., Ltd.) as a softening agent, and 30 parts by weight of resin vulcanizing agent (trade name: TACKIROL 201-35M/B, manufactured by Taoka Chemical Co., Ltd.) were admixed with one another and kneaded by using a banbury mixer (manufactured by Kobe Steel, Ltd.) and a roll (manufactured by Nippon Roll MFG. Co., Ltd.) to prepare a butyl rubber composition.

<Preparation of ethylene-propylene rubber layer material (ethylene-propylene rubber composition)>

100 parts by weight of EPDM (trade name: ESPRENE 532T, manufactured by Sumitomo Chemical Co., Ltd.), 1 part by weight of stearic acid (trade name: LUNAC S30, manufactured by Kao Corporation), 5 parts by weight of zinc oxide (two kinds of zinc oxide, manufactured by MITSUI MINING & SMELTING CO., LTD.), 100 parts by weight of FEF grade carbon black (trade name: SEAST SO, manufactured by TOKAI CARBON CO., LTD.), 70 parts by weight of naphthene oil (trade name: DIANA PROCESS NM-300, manufactured by Idemitsu Kosan Co., Ltd.) as a softening agent, 1 part by weight of thioram vulcanizing promoter (trade name: SANCELER TT-G, manufactured by SANSHIN CHEMICAL INDUSTRY CO., LTD.), 1 part by weight of dithiocarbamic acid salt vulcanizing promoter (trade name: SANCELER BZ-G, manufactured by SANSHIN CHEMICAL INDUSTRY CO., LTD.), and 1 part by weight of vulcanizing agent (sulfur) (trade name: SULFUR PTC, manufactured by DAITO SANGYO CO., LTD.) were admixed with one another and kneaded by using a banbury mixer (manufactured by Kobe Steel, Ltd.) and a roll (manufactured by Nippon Roll MFG. Co., Ltd.) to prepare an ethylene-propylene rubber composition.

<Hose production>

By using a TPX mandrel (outer diameter: 12 mm, manufactured by Mitsui Chemical, Inc.), the material for resin layer was extruded on the mandrel to form in a hose shape, and thus a tubular resin layer (thickness: 0.15 mm) having an inner skin layer (thickness: 4 μm) and an outer skin layer (thickness: 4 μm) was formed. Next, the outer peripheral surface was subjected to a polishing treatment using a wire brush (manufactured by State industry Co. , Ltd.) to completely remove the outer skin layer. Subsequently, the butyl rubber composition which has been prepared above was extruded on the outer peripheral surface of the resin layer to form a butyl rubber layer thereon. Then, on the outer peripheral surface thereof a reinforcing layer was formed by blade braiding with polyester threads. Further, the ethylene-propylene rubber composition which has been prepared above was extruded on the outer peripheral surface of the reinforcing layer to form an ethylene-propylene rubber layer thereon. After vulcanization (170°C × 30 min), the mandrel was removed and the resulting long laminated hose was cut to have desired length. As a result, a hose constituted of the skin layer (thickness: 4 μm), the resin layer (thickness: 0.15 mm), the butyl rubber layer (thickness: 2.0 mm), the reinforcing layer, and EPDM layer (thickness: 1.0 mm) in the order was obtained.

[Example 2]

<Preparation of resin layer material>

By using a double-axis kneader (manufactured by JSW STEEL LTD.), polyamide 66 (PA66) (trade name: NYLON 66 2015B, manufactured by Ube Industries, Ltd.) as a polyamide resin and maleic anhydride modified EPDM (trade name: TAFMER MH7020, manufactured by Mitsui Chemicals, Inc.) as a modified polyolefin elastomer were mixed at the temperature the same or higher than the melting point of the polyamide resin (270°C). The mixing ratio (weight ratio) between the polyamide resin (a) and the modified polyolefin elastomer (b) was (a)/(b) = 70/30.

A hose was produced in the same manner as in Example 1 except using the resin layer material prepared above.

[Example 3]

<Preparation of resin layer material>

By using a double-axis kneader (manufactured by JSW STEEL LTD.), polyamide 6 (PA6) (trade name: NYLON 6 1030B, manufactured by Ube Industries, Ltd.) as a polyamide resin and a copolymer of glycidyl methacrylate and ethylene (trade name: BONDFAST 2C, manufactured Sumitomo Chemical Co., Ltd.) were mixed at the temperature the same or higher than the melting point of the polyamide resin (250°C). The mixing ratio (weight ratio) between the polyamide resin (a) and the modified polyolefin elastomer (b) was (a)/(b) = 80/20.
A hose was produced in the same manner as in Example 1 except using the resin layer material prepared above.

[Example 4]

<Preparation of resin layer material>

By using a double-axis kneader (manufactured by JSW STEEL LTD.), polyamide 6T (PA6T) (trade name: NYLON 6T RENY 6002, manufactured by Mitsubishi Engineering-Plastics Corporation) as an aromatic polyamide resin and maleic anhydride modified EPDM (trade name: TAFMER MH7020, manufactured by Mitsui Chemicals, Inc.) as a

modified polyolefin elastomer were mixed at the temperature the same or higher than the melting point of the polyamide resin (250°C). The mixing ratio (weight ratio) between the polyamide resin (a) and the modified polyolefin elastomer (b) was (a)/(b) = 90/10.
A hose was produced in the same manner as in Example 1 except using the resin layer material prepared above.

[Example 5]

<Preparation of resin layer material>

The resin layer material was prepared in the same manner as in Example 1 except that polyamide 92 (PA92) (trade name: 400B, manufactured by Ube Industries, Ltd.), which is as a polycondensate of nonane diamine and dibutyl oxalate (i.e. polyoxiamide resin), is used instead of polyamide 6 (PA6) (trade name: NYLON 6 1030B, manufactured by Ube Industries, Ltd.) as a polyamide resin.
Then, a hose was produced in the same manner as in Example 1 except using the resin layer material prepared above.

[Comparative example 1]

A hose was produced in the same manner as in Example 1 except that no polishing treatment is performed to remove the outer skin layer. Specifically, with reference to the Example 1, a hose in which the inner skin layer (thickness: 4 μm), the resin layer (thickness: 0.15 mm), the outer skin layer (thickness: 4 μm), the butyl rubber layer (thickness: 2.0 mm), the reinforcing layer, and EPDM layer (thickness: 1.0 mm) are formed in the order was obtained.
Characteristics of the hoses obtained from the Examples and the Comparative Examples were evaluated according to the criteria described below. The evaluation results are summarized in the following Table 1.

[Tensile modulus of each layer]

Tensile modulus (hardness) was measured for each layer by using a universal hardness tester (manufactured by MEISHIN KOKI Co., Ltd.). Further, the tensile modulus (hardness) of each layer represents the value measured with reference to JIS K 7127 under the elongation rate of 5 ± 1.0 mm per minute.

[Interlayer adhesion]

A sample for adhesion evaluation was cut out from each hose (width: 20 mm, length 100 mm) . The butyl rubber layer side of the sample was fixed on a tensile tester (JIS B 7721) and the sample was elongated at the resin layer side with elongation rate of 50 mm per minute. Then, the peeling between the rubber layer and the resin layer was examined with a naked eye. When the rubber layer is fractured, it was labeled as "fracture of rubber."

[Bending fatigue]

To evaluate the bending fatigue of each hose, the whip test was performed as follows. Specifically, as illustrated in FIG. 5, one end 12 of a hose 11 having test length (hose length) of 300 mm was fixed, and then the whip test was carried out one million times under the condition as follows: elliptical vibration with height of 9 mm and width of 18 mm, pressure of 3.5 MPa, and test temperature of 130°C. For the evaluation, when there is a fracture in the resin layer, it was labeled as "×". When there is no fracture, it was labeled as "○".
[Table 1]

| | Example | | | | | Comparative Example |
|---|---|---|---|---|---|---|
| | 1 | 2 | 3 | 4 | 5 | 1 |
| Surface treatment | Polishing treatment | Polishing treatment | Polishing treatment | Polishing treatment | Polishing treatment | - |

(continued)

| | | Example | | | | | Comparative Example |
|---|---|---|---|---|---|---|---|
| | | 1 | 2 | 3 | 4 | 5 | 1 |
| Tensile modulus (MPa) | Skin layer (inner side) | 2500 | 2800 | 2500 | 4500 | 2300 | 2500 |
| | Resin layer | 700 | 1000 | 900 | 3200 | 650 | 700 |
| | Skin layer (outer side) | - | - | - | - | - | 2500 |
| | Butyl rubber layer | 10 | 10 | 10 | 10 | 10 | 30 |
| | EPDM layer | 5 | 5 | 5 | 5 | 5 | 20 |
| Interlayer adhesive property | | Fracture of rubber | Fracture of rubber | Fracture of rubber | Fracture of rubber | Fracture of rubber | Fracture of rubber |
| Bending fatigue test | | ○ | ○ | ○ | ○ | ○ | × |

As shown in the results of Table 1 above, the tensile modulus (hardness) of each layer gradually decreases in the product of the Examples because the outer skin layer is removed by a polishing treatment. Accordingly, even after the bending fatigue test, the product of the Examples did not show any fracture in the resin layer.

On the other hand, the tensile modulus (hardness) of each layer does not gradually decrease in the product of the Comparative Example 1 because the outer skin layer which whose tensile modulus (hardness) is higher than that of the resin layer is present on an outer peripheral surface of the resin layer. As such, in the Comparative Example 1, local stress concentration occurs at the outer skin layer, and as a result, a fracture in the resin layer is shown in the bending fatigue test.

Meanwhile, although in Examples described above specific embodiments of the invention are shown, the Examples are for the purposes of exemplification only, and they are not to be construed to limit the invention. Further, any modifications belonging to the equivalents of the Claims are also within the scope of the invention.

INDUSTRIAL APPLICABILITY

The refrigerant transporting hose of the invention is used as a hose for transporting a refrigerant such as carbon dioxide, freon, freon substitute, and propane that are used for an air conditioner · radiator, or the like. Further, the refrigerant transporting hose of the invention may be also used not only for automobiles but also for other transporting vehicles (e.g. an industrial transporting vehicle such as an airplane, a fork lift, a shovel car, and a crane, a railway vehicle, and the like), or the like.

REFERENCE SIGNS LIST

1 RESIN LAYER
6 SKIN LAYER
7 BUTYL RUBBER LAYER
8 ETHYLENE-PROPYLENE RUBBER LAYER
9 REINFORCING LAYER

## Claims

**1.** A hose for transporting a refrigerant, comprising:

a butyl rubber layer formed on an outer periphery of a tubular resin layer in contact with a refrigerant and an ethylene-propylene rubber layer formed on an outer periphery of the butyl layer,
wherein the resin layer is composed of a material for resin layer containing as a main component, a mixture of a polyamide resin and a modified polyolefin elastomer, and a skin layer is formed only on an inner peripheral surface of the resin layer so that tensile modulus (A) of the skin layer, tensile modulus (B) of the resin layer excluding the skin layer, tensile modulus (C) of the butyl rubber layer, and tensile modulus (D) of the ethylene-propylene rubber layer satisfy the relationship that is defined by the following formula ($\alpha$):

$$(A) > (B) > (C) > (D) \cdots (\alpha)$$

**2.** The hose for transporting a refrigerant according to Claim 1,
wherein tensile modulus (A) of the skin layer is in the range of 3000 to 2000 MPa, the tensile modulus (B) of the resin layer is in the range of less than 2000 MPa and 500 MPa or higher, the tensile modulus (C) of the butyl rubber layer is preferably in the range of less than 500 MPa and 10 MPa or higher, and the tensile modulus (D) of the ethylene-propylene rubber layer is less than 10 MPa.

**3.** The hose for transporting a refrigerant according to Claim 1 or 2,
wherein the modification of the modified polyolefin elastomer is at least any one of maleic anhydride modification and epoxy modification.

**4.** The hose for transporting a refrigerant according to any one of Claims 1 to 3,
wherein the mixing ratio between the polyamide resin (a) and the modified polyolefin elastomer (b) is, in terms of weight, within the range of (a)/(b) = 90/10 to 60/40.

**5.** A method of producing the hose for transporting a refrigerant according to any one of Claims 1 to 4, comprising:

polishing an outer skin layer between an inner skin layer and an outer skin layer that are formed on an inner peripheral surface and an outer peripheral surface, respectively, of a tubular resin layer obtained by an extrusion of a material for resin layer containing, as a main component, a mixture of a polyamide resin and a modified polyolefin elastomer so as to remove the outer skin layer,
forming a butyl rubber layer on the outer periphery of the resin layer, and
further forming an ethylene-propylene rubber layer on the outer periphery of the butyl rubber layer.

Fig. 1

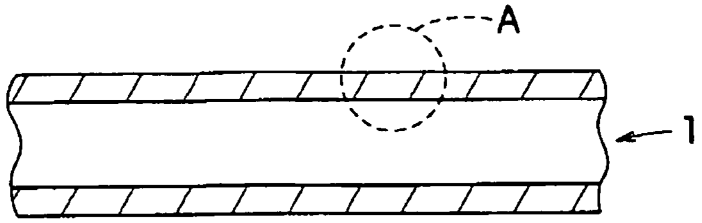


Fig. 2

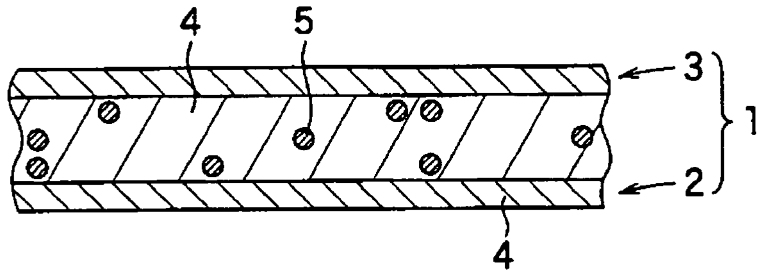


Fig. 3

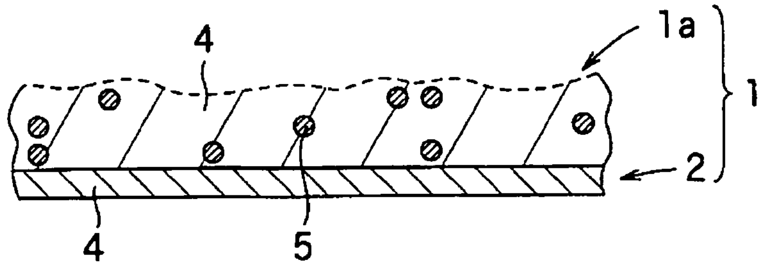

Fig. 4

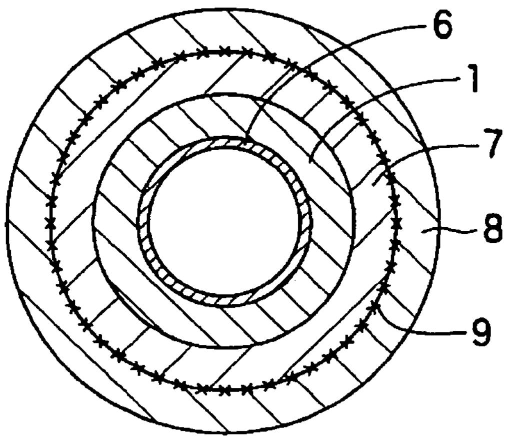


Fig. 5

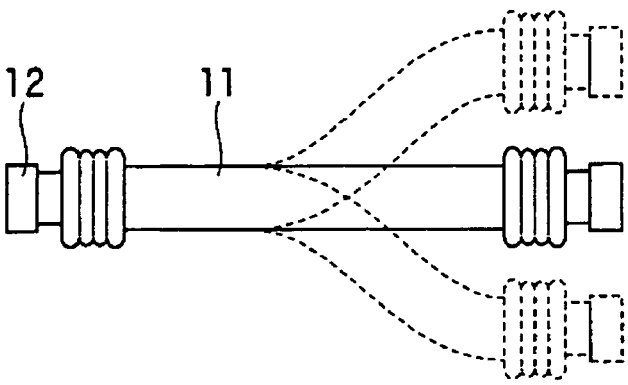

**INTERNATIONAL SEARCH REPORT**

International application No.
PCT/JP2011/068652

A. CLASSIFICATION OF SUBJECT MATTER
*F16L11/08*(2006.01)i, *B32B1/08*(2006.01)i, *B32B25/18*(2006.01)i

According to International Patent Classification (IPC) or to both national classification and IPC

B. FIELDS SEARCHED

Minimum documentation searched (classification system followed by classification symbols)
F16L11/00-11/26, B32B1/08, B32B25/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 4365454 B1 (The Yokohama Rubber Co., Ltd.), 18 November 2009 (18.11.2009), entire text; fig. 1 (Family: none) | 1-5 |
| A | JP 7-117178 A (Nichirin Co., Ltd.), 09 May 1995 (09.05.1995), entire text; all drawings & US 5488974 A | 1-5 |
| A | JP 2001-317662 A (Kabushiki Kaisha Nagano San'yo Kasei), 16 November 2001 (16.11.2001), entire text; all drawings (Family: none) | 1-5 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
12 September, 2011 (12.09.11)

Date of mailing of the international search report
20 September, 2011 (20.09.11)

Name and mailing address of the ISA/
Japanese Patent Office

Facsimile No.

Authorized officer

Telephone No.

Form PCT/ISA/210 (second sheet) (July 2009)

**INTERNATIONAL SEARCH REPORT**

International application No.
PCT/JP2011/068652

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-220516 A (Toyoda Gosei Co., Ltd.), 01 October 2009 (01.10.2009), entire text; all drawings (Family: none) | 1-5 |
| A | JP 2009-174696 A (Tokai Rubber Industries, Ltd.), 06 August 2009 (06.08.2009), entire text; all drawings & US 2008/0230136 A1 & EP 1972434 A1 & CN 101270836 A | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4365454 B